# EUROPÄISCHE PATENTSCHRIFT

(11) **EP 1 945 931 B1**
(45) Veröffentlichungstag und Bekanntmachung des Hinweises auf die Patenterteilung: **10.07.2013**
(21) Anmeldenummer: 06805383.4
(22) Anmeldetag: 10.10.2006
(51) Int. Cl.: F02C 7/36, F01D 3/04, F01D 11/22, F16D 3/06, F01D 5/06, F16C 3/035

(54) **VORRICHTUNG ZUM AXIALEN VERSCHIEBEN EINES TURBINENROTORS**
DEVICE FOR AXIALLY DISPLACING A TURBINE ROTOR
DISPOSITIF PERMETTANT LE DEPLACEMENT AXIAL D'UN ROTOR DE TURBINE

(30) Priorität: 13.10.2005 DE 102005048982
(43) Veröffentlichungstag der Anmeldung: 23.07.2008
(73) Patentinhaber: MTU Aero Engines GmbH, 80995 München (DE)
(72) Erfinder: FIALA, Andreas, 80339 München (DE); KREMMER, Michael, 85232 Bergkirchen (DE)
(86) Internationale Anmeldenummer: PCT/DE2006/001765
(87) Internationale Veröffentlichungsnummer: WO 2007/041997

(56) Entgegenhaltungen:
- WO-A-00/28190
- WO-A-93/20335
- US-A1- 1 823 310
- US-A1- 2 864 244
- US-A1- 4 193 741
- US-A1- 2003 215 323

## Beschreibung

Die Erfindung betrifft eine Vorrichtung zum aktiven axialen Verschieben von zumindest einem mit einer Turbinenwelle verbundenen Turbinenrotor relativ zu zumindest einem korrespondierenden Turbinenstator in einer mehrstufigen Axialturbine.

Der Wirkungsgrad einer mehrstufigen Axialturbine, insbesondere bei Stator- und / oder Rotor-Synchronisierung, auch als "Clocking" bezeichnet, hängt von der axialen Anordnung der Rotorschaufeln relativ zu den Statorschaufeln ab. "Clocking" bei Turbinenstatoren und bei Turbinenrotoren bedeutet, dass die jeweiligen Schaufelzahlen von Stator oder Rotor in den Gittern gleich sind, und die Umfangsposition von Gitter zu Gitter theoretisch und experimentell so gewählt sind, dass sich ein Optimum des Turbinenwirkungsgrades ergibt. Dieses Turbinenwirkungsgrad-Optimum wiederum ist auch von der axialen Stellung des Turbinenrotors zum Turbinenstator abhängig.

Aus der EP 0 756 667 B1 ist ein "Clocking"- bzw. Synchronisations-Verfahren bekannt, bei dem die Nachläufe eines ersten Schaufelgitters durch ein zweites Schaufelgitter mit Relativbewegung auf die Schaufeleintrittskanten eines dritten, relativ zum ersten feststehenden Schaufelgitter gelenkt werden, wobei eine maximale, umfängliche Abweichung zwischen Nachlauf und Eintrittskante von plus/minus 12,5 Prozent der Schaufelteilung zulässig sein soll.

Weitere Verfahren zum Positionieren von Turbinenschaufelstufen sind in der DE 100 53 361 C1 und der EP 1 201 877 B1 angegeben.

Das Dokument US 1 823 310 A1 betrifft eine Vorrichtung zum aktiven axialen Verschieben von einem mit einer Turbinenwelle verbundenen Turbinenrotor relativ zu einem korrespondierenden Turbinenstator zum Zweck einer lastabhängigen Spaltverstellung vorzugsweise an den Schaufelspitzen. Dabei wird die gesamte Turbinenwelle mittels eines axial verstellbaren Schublagers (thrust bearing) axial bewegt.

Aus dem Dokument US 2 864 244 A1 ist eine passive, axial nachgiebig, drehmomentübertragende Wellenkupplung (flexible coupling) für Gasturbinen bekannt, welche zwei Wellenhälften über eine verzahnte Buchse (splined sleeve) und Federscheiben (spring disks) drehmomentübertragend und axial nachgiebig bzw. dämpfend verbindet. Dabei sollen ungewollte Axialverschiebungen und - lasten reduziert bzw. kompensiert werden.

Auch die Dokumente US 2003/215323 A1, WO 00/28190 A und WO 93/20335 A betreffen Vorrichtungen zum aktiven axialen Verschieben von mit einer Turbinenwelle verbundenen Turbinenrotoren zum Zweck der Spalteinstellung bzw. -verstellung. In all diesen Fällen werden die Turbinenwellen als Ganzes axial verschoben.

Ferner ist bekannt, dass bedingt durch Bautoleranzen, Verschlechterung der Turbinenkomponenten im Langzeitbetrieb, aber auch bei vom Auslegungszustand abweichenden Betriebszuständen, wie beispielsweise bei Teillast / Überlast oder Heißtag / Kalttag, der Turbinenwirkungsgrad von seinem möglichen Optimum entfernt liegen kann.

Schließlich können Turbinenlärm und die Anregung von Turbinenschaufelschwingungen durch ungewollte axiale Verschiebung des Turbinenrotors relativ zum Stator beeinflusst werden.

Der Erfindung liegt daher die Aufgabe zugrunde, die oben genannten technischen Probleme des Standes der Technik zu vermeiden und eine Einstellmöglichkeit für den Abstand des Turbinenrotors relativ zum Turbinenstator im Stillstand und / oder im laufenden Betrieb zur Verfügung zu stellen.

Diese Aufgabe wird erfindungsgemäß durch einen Verschiebemechanismus mit den Merkmalen des Patentanspruchs 1 gelöst. Vorteilhafte Ausgestaltungen und Weiterbildungen der Erfindung sind in den abhängigen Ansprüchen angegeben.

Die erfindungsgemäße Vorrichtung zum aktiven axialen Verschieben von zumindest einem mit einer Turbinenwelle verbundenen Turbinenrotor relativ zu zumindest einem korrespondierenden Turbinenstator in einer mehrstufigen Axialturbine weist eine geteilte Turbinenwelle mit einer ersten axial verschiebbaren Wellenhälfte auf, die über eine Turbinenscheibe mit dem Turbinenrotor und über eine axial verstellbare Drehmoment-Axialkraft-Kupplung mit einer zweiten axialfesten Wellenhälfte drehmomentübertragend verbunden ist.

Derartig optimierte Turbinenstufen können in allen mehrstufigen luft-, gas- oder dampfdurchströmten stationären Antrieben für die Stromerzeugung, in Schiffsantrieben, in Land- oder Luftfahrzeugantrieben zur Anwendung kommen.

Durch axiales Verschieben des Turbinenrotors relativ zum Turbinenstator und durch Regelung dieser axialen Verschiebung wird der Betrieb einer Turbine in deren möglichem Optimum des Wirkungsgrads gehalten. Beispielsweise sind bei einer geclockten vielstufigen Niederdruckturbine eines Flugantriebs mit 77000 lbf Startschub und einem Bypass Verhältnis von 9, beim Turbinenwirkungsgrad Unterschiede zwischen Optimum und Minimum von - 0,4% bis +0,4%, d.h. eine Spanne von 0,8% zu erwarten, wenn man den Rotor in beiden Richtungen in einer Spanne von 4 mm axial relativ zu dem feststehenden Stator verschiebt. Dies lässt eine Spanne im spezifischen Brennstoffverbrauch von 0,8% und in der Turbineneintrittstemperatur von 15° C erwarten. Der Betrieb im Optimum des Turbinenwirkungsgrads kann durch die axiale Rotorverschiebung und deren Regelung sichergestellt werden. Außerdem können auch der Lärm und die Schaufelschwingungen minimiert werden.

Eine vorteilhafte Ausführungsform der Erfindung sieht vor, dass die Vorrichtung einen Gleitstutzen zum axialen Übereinandergleiten der beiden Wellenhälften aufweist. Da die Länge des Gleitstutzens den Verschiebeweg begrenzt, ist zunächst eine Berechnung des maximalen Verschiebeweges sinnvoll.

Eine vorteilhafte Ausführungsform der Erfindung sieht vor, dass die Vorrichtung eine Verzahnung als Drehmoment-Kupplung aufweist. Aber auch andere formschlüssige Kupplungen können hier zur Anwendung kommen, so lange sie eine axiale Verschiebung der beiden Wellenhälften relativ zueinander zulassen.

Eine vorteilhafte Ausführungsform der Erfindung sieht vor, dass die Vorrichtung eine Verstellkammer aufweist. Die Verstellkammer kann dabei beispielsweise eine umlaufende Aufnahme für die übereinander axial gleitenden verzahnten Wellenhälften der hohlen Turbinenwelle sein, in der ein entsprechender Betätigungsmechanismus für die Axialverschiebung angeordnet ist.

Eine vorteilhafte Ausführungsform der Erfindung sieht vor, dass die Verstellkammer eine Druckkammer zur hydraulischen oder pneumatischen Betätigung aufweist. Als Hydraulikflüssigkeiten kommen hier beispielsweise Öl oder Brennstoff zur Anwendung.

Eine vorteilhafte Ausführungsform der Erfindung sieht vor, dass die Vorrichtung mechanisch, elektromagnetisch oder piezoelektrisch betätigbar ist. Dabei kann auch eine Kombination der verschiedenen Betätigungen sinnvoll sein, beispielsweise eine mechanische Betätigung mit einer Feder oder über Hebelgestänge und eine elektromagnetische oder hydraulische Betätigung.

Es ist auch denkbar die Funktion der Vorrichtung in die Funktion des Festlagers der Turbinenwelle zu integrieren.

Eine vorteilhafte Ausführungsform der Erfindung sieht vor, dass eine Verschiebeweg der geteilten Turbinenwelle von + 4 mm bis - 4 mm beispielsweise für eine Niederdruckturbine mit 77 klbf Startschub vorgesehen ist. Der Verschiebeweg in der angegebenen Größenordnung von + 4 mm bis - 4 mm äußert sich in einem Parameter, der die aerodynamische Leistung einer Turbine repräsentiert, also deren Wirkungsgrad kennzeichnet, und der als Einstell- und Regelungssignal benutzt wird.

Eine vorteilhafte Ausführungsform der Erfindung sieht vor, dass ein Einrichtung zum Regeln des Verschiebewegs der geteilten Turbinenwelle vorgesehen ist.

Hier kann beispielsweise eine elektronische Regelung mit geschlossenem Regelkreis vorgesehen sein. Dabei sieht eine vorteilhafte Ausführungsform der Erfindung vor, dass Sensoreinrichtungen zum Erfassen der Ist-Position der Turbinenwelle vorgesehen sind. Bei fest eingestellten Regelparametern der Gesamtmaschine wie beispielsweise Drehzahl von Niederdruck-, und Hochdruckwelle, Triebwerks-Druckverhältnis, Wellenleistung, Nettoschub oder ähnlichen, ist der Wirkungsgrad der Turbine durch charakteristische Größen repräsentiert und kann durch Optimierung dieser Größen auf sein Optimum eingestellt bzw. geregelt werden. Solche charakteristischen Größen sind das Verhältnis der Drehzahlen von Hochdruck- und Niederdruck-Welle, Brennstoffverbrauch, schubspezifischer Brennstoffverbrauch, wellenleistungsspezifischer Brennstoffverbrauch, Abgastemperatur, Turbineneintrittstemperatur, u.ä.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig. 1: einen schematischen Schnitt durch eine Turbine mit Verschiebemechanismus;
- Fig. 2: eine Detaildarstellung des Verschiebemechanismus aus Figur 1;
- Fig. 3: ein Diagramm, in dem die Veränderung des Turbinenwirkungsgrads über der Axialverschiebung der Turbinenwelle dargestellt ist.

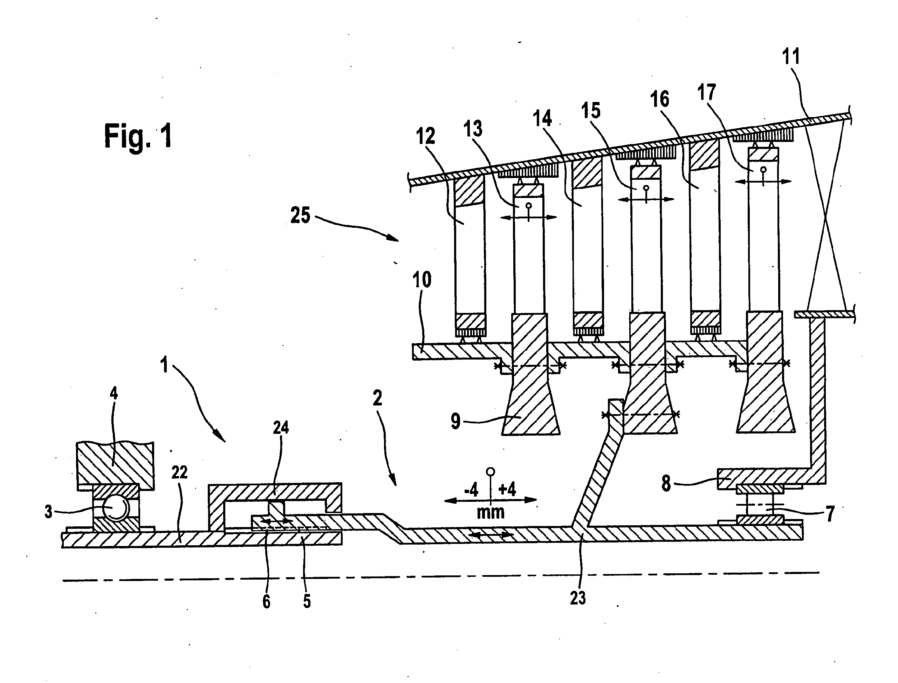

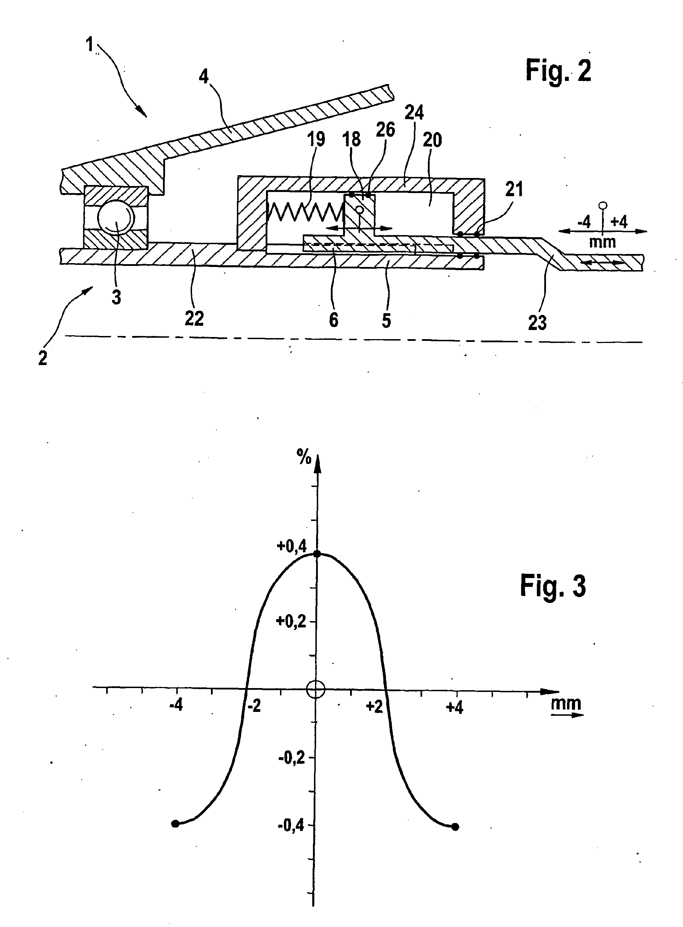

Figur 1 zeigt eine schematische beispielhaft Darstellung einer Ausfuhrungsform einer Vorrichtung 1 zum axialen Verschieben von Turbinenrotoren 13, 15, 17 relativ zu korrespondierenden Turbinenstatoren 12, 14, 16 in einer mehrstufigen Axialturbine 25. Dabei weist die Axialturbine 25 mit Dichtringen 10 und Turbinenscheiben 9 verbundene Rotorschaufeln und mit einem Turbinengehäuse 11 verbundene Statorschaufeln auf. Figur 2 zeigt die Verschiebevorrichtung 1 aus Figur 1 in einer Detailansicht.

Eine Turbinenwelle 2 ist zwischen einem in einem Festlagerträger 4 angeordneten Festlager 3 und einem in einem Lagerträger 8 angeordneten Loslager 7 derart geteilt ausgeführt, dass die mit dem Loslager 7 verbundene hintere Wellenhälfte 23 gegenüber der mit dem Festlager 3 verbundenen vorderen Wellenhälfte 22 axial in einem Gleitstutzen 5 verschiebbar ist.

Die Verschiebevorrichtung 1 besteht dabei aus einer auf der vorderen Wellenhälfte 22 angeordneten, über den Wellenumfang umlaufenden Kammer 24 mit rechteckigem Querschnitt (siehe auch Figur 2), in welcher die hintere Wellenhälfte 23 axial verschiebbar aufgenommen ist und diese relativ zur Kammer 24 mit Dichtringen 21 abgedichtet ist. Zur Übertragung des durch die Turbinendrehung erzeugten Drehmoments ist in der Kammer 24 eine Verzahnung 6 zwischen der vorderen Wellenhälfte 22 und der hinteren Wellenhälfte 23 vorgesehen.

Zur Aufnahme der axialen Turbinenrotorkraft ist beispielhaft die folgende Konstruktion vorgesehen. Die Kammer 24 ist durch einen umlaufenden Steg 18, der mit der hinteren Wellenhälfte 23 fest verbunden ist, z.B. angeschweißt ist, in zwei Bereiche unterteilt. Im vorderen Bereich der Kammer 24 sind über den Umfang verteilt Schraubenfedern 19 angeordnet, die sich zum einen an der Kammerwand und zum anderen an dem Steg 18 abstützen. Der Steg 18 ist gegenüber der Kammer 24 mit Dichtringen 26 abgedichtet. Ferner ist der Spalt, durch den die hintere Wellenhälfte 23 in die Kammer 24 geführt ist, mit Dichtringen 21 abgedichtet. Hierdurch wird eine Druckkammer 20 gebildet, über die der Steg 18 mit Hydraulikflüssigkeit druckbeaufschlagt und gegen die Federn 19 gedruckt werden kann. Bei Entluftung der Druckkammer 20 konnen die Federn 19 den Steg 18 und damit die hintere Wellenhälfte 23 in Richtung des Loslagers 7 verschieben.

Der Verschiebeweg beträgt im vorliegenden Ausführungsbeispiel - 4 mm und + 4 mm, gerechnet von einer vordefinierten 0 Stellung. Dabei wird zunächst die IST-Position der Rotoren 13, 15, 17 mit der für den optimalen Turbinenwirkungsgrad erforderlichen Rotorposition verglichen und von einer (nicht gezeigten) Regeleinrichtung ein entsprechender Verfahrweg berechnet. Dann wird der Verschiebemechanismus von der Regeleinheit angesteuert und die beiden Wellenhälften 22, 23 gegeneinander verschoben.

Die axiale Verschiebung und die Regelung der axialen Verschiebung des Turbinenrotors relativ zur axialen Position des feststehenden Turbinenstators im Bereich von ca. 4 mm in beiden Richtungen erfolgt also durch axiale Längung bzw. Kürzung der Turbinenwelle, deren eines Ende axial am Festlager fixiert ist. Die axiale Längung bzw. Kürzung erfolgt derart, dass die Turbinenwelle axial auf dem Gleitstutzen verschieblich ist, wobei das Drehmoment durch die Verzahnung übertragen wird. Die axiale Position der Turbinenwelle relativ zum am Festlager axial fixierten Gleitstutzen wird durch einen geregelten Mechanismus festgelegt, der im vorliegenden Ausführungsbeispiel kombiniert mechanisch / hydraulisch betätigt wird. Dabei kann die Festlager- und die Gleitlagerfunktion auch kombinierbar sein.

Figur 3 zeigt ein Diagramm, in dem die Veränderung des Turbinenwirkungsgrads in Prozent über der axialen Rotorverschiebung relativ zum Stator in mm dargestellt ist. Dabei ergibt sich in etwa eine Glockenkurve, die bei - 4 mm und bei + 4 mm jeweils ein Minimum mit einer Wirkungsgradänderung von - 0,4 % aufweist. Bei - 2 mm und bei + 2 mm beträgt die Wirkungsgradänderung 0. Bei 0 mm Rotorverschiebung relativ zum Stator, das heißt im Auslegungspunkt, erreicht die Veränderung des Turbinenwirkungsgrads ein Optimum. Die Wirkungsgradänderung beträgt hier + 0,4 %.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Vorrichtung zum aktiven axialen Verschieben von zumindest einem mit einer Turbinenwelle (2) verbundenen Turbinenrotor (13, 15, 17) relativ zu zumindest einem korrespondierenden Turbinenstator (12, 14, 16) in einer mehrstufigen Axialturbine (25), **dadurch gekennzeichnet, dass** die Turbinenwelle (2) geteilt ausgeführt ist und eine erste axial verschiebbare Wellenhälfte (23) aufweist, die über eine Turbinenscheibe (9) mit dem Turbinenrotor (13, 15, 17) und über eine axial verstellbare Drehmoment-Axialkraft-Kupplung (6) mit einer zweiten, axial festen Wellenhälfte (22) drehmomentübertragend verbunden ist.

2. Vorrichtung zum axialen Verschieben eines Turbinenrotors nach Patentanspruch 1, **dadurch gekennzeichnet, dass** die Vorrichtung einen Gleitstutzen (5) zum axialen Übereinandergleiten der beiden Wellenhälften (22, 23) aufweist.

3. Vorrichtung zum axialen Verschieben eines Turbinenrotors nach einem der vorhergehenden Patentansprüche, **dadurch gekennzeichnet, dass** die Vorrichtung eine Verzahnung (6) als Drehmoment-Kupplung aufweist.

4. Vorrichtung zum axialen Verschieben eines Turbinenrotors nach einem der vorhergehenden Patentansprüche, **dadurch gekennzeichnet, dass** die Vorrichtung eine Verstellkammer (24) zur Turbinenrotor-Axialkraftaufnahme aufweist.

5. Vorrichtung zum axialen Verschieben eines Turbinenrotors nach einem der vorhergehenden Patentansprüche, **dadurch gekennzeichnet, dass** die Verstellkammer (24) eine Druckkammer (20) zum hydraulischen oder pneumatischen Verschieben der beiden Wellenhälften (22, 23) gegeneinander aufweist.

6. Vorrichtung zum axialen Verschieben eines Turbinenrotors nach einem der vorhergehenden Patentansprüche, **dadurch gekennzeichnet, dass** die Vorrichtung 1 mechanisch betätigbar ist.

7. Vorrichtung zum axialen Verschieben eines Turbinenrotors nach einem der vorhergehenden Patentansprüche, **dadurch gekennzeichnet, dass** die Vorrichtung 1 elektromagnetisch betätigbar ist.

8. Vorrichtung zum axialen Verschieben eines Turbinenrotors nach einem der vorhergehenden Patentansprüche, **dadurch gekennzeichnet, dass** die Vorrichtung 1 piezoelektrisch betätigbar ist.

9. Vorrichtung zum axialen Verschieben eines Turbinenrotors nach einem der vorhergehenden Patentansprüche, **dadurch gekennzeichnet, dass** ein charakteristischer Verschiebeweg der geteilten Turbinenwelle (22, 23) von + 4 mm bis - 4 mm vorgesehen ist.

10. Vorrichtung zum axialen Verschieben eines Turbinenrotors nach einem der vorgenannten Patentansprüche, **dadurch gekennzeichnet, dass** eine Einrichtung zum Regeln des Verschiebewegs der geteilten Turbinenwelle (22, 23) vorgesehen ist.

11. Vorrichtung zum axialen Verschieben eines Turbinenrotors nach einem der vorgenannten Patentansprüche, **dadurch gekennzeichnet, dass** Sensoreinrichtungen zum Erfassen der Ist-Position der geteilten Turbinenwelle (22, 23) vorgesehen sind.

## Claims

1. A device for the active axial displacement of at least one turbine rotor (13, 15, 17), connected to a turbine shaft (2), relative to at least one corresponding turbine stator (12, 14, 16) in a multi-stage axial turbine (25), **characterised in that** the turbine shaft (2) is of a split construction and has a first axially displaceable shaft half (23) which is connected, in a torque-transmitting manner, to the turbine rotor (13, 15, 17) by way of a turbine disk (9) and to a second axially fixed shaft half (22) by way of an axially adjustable torque/axial-force coupling (6).

2. A device for the axial displacement of a turbine rotor according to claim 1, **characterised in that** the device has a sliding stub (5) for axial sliding of the two shaft halves (22, 23) over each other.

3. A device for the axial displacement of a turbine rotor according to one of the preceding claims, **characterised in that** the device has a tooth construction (6) as a torque coupling.

4. A device for the axial displacement of a turbine rotor according to one of the preceding claims, **characterised in that** the device has an adjusting chamber (24) for taking up the turbine-rotor axial force.

5. A device for the axial displacement of a turbine rotor according to one of the preceding claims, **characterised in that** the adjusting chamber (24) has a pressure chamber (20) for the hydraulic or pneumatic displacement of the two shaft halves (22, 23) with respect to each other.

6. A device for the axial displacement of a turbine rotor according to one of the preceding claims, **characterised in that** the device 1 can be actuated mechanically.

7. A device for the axial displacement of a turbine rotor according to one of the preceding claims, **characterised in that** the device 1 can be actuated electromagnetically.

8. A device for the axial displacement of a turbine rotor according to one of the preceding claims, **characterised in that** the device 1 can be actuated piezoelectrically.

9. A device for the axial displacement of a turbine rotor according to one of the preceding claims, **characterised in that** a characteristic displacement path of the split turbine shaft (22, 23) of + 4 mm to - 4 mm is provided.

10. A device for the axial displacement of a turbine rotor according to one of the preceding claims, **characterised in that** an arrangement for regulating the displacement path of the split turbine shaft (22, 23) is provided.

11. A device for the axial displacement of a turbine rotor according to one of the preceding claims, **characterised in that** sensor devices for detecting the actual position of the split turbine shaft (22, 23) are provided.

## Revendications

1. Dispositif servant à déplacer activement par coulissement de manière axiale au moins un rotor de turbine (13, 15, 17) relié à un arbre de turbine (2) par rapport à au moins un stator de turbine (12, 14, 16) correspondant dans une turbine axiale (25) à plusieurs niveaux, **caractérisé en ce que** l'arbre de turbine (2) est réalisé de manière divisée et présente une première moitié d'arbre (23) pouvant être déplacée par coulissement de manière axiale, laquelle est reliée, de manière à transmettre un couple de rotation, au rotor de turbine (13, 15, 17) par l'intermédiaire d'un disque de turbine (9) et à une deuxième moitié d'arbre (22) fixe de manière axiale par l'intermédiaire d'un couplage de force axiale de couple de rotation (6) pouvant être déplacé de manière axiale.

2. Dispositif servant à déplacer par coulissement de manière axiale un rotor de turbine selon la revendication 1, **caractérisé en ce que** le dispositif présente un support coulissant (5) servant à faire glisser de manière axiale l'une sur l'autre les deux moitiés d'arbre (22, 23).

3. Dispositif servant à déplacer par coulissement de manière axiale un rotor de turbine selon l'une quelconque des revendications précédentes, **caractérisé en ce que** le dispositif présente une denture (6) en tant que couplage de couple de rotation.

4. Dispositif servant à déplacer par coulissement de manière axiale un rotor de turbine selon l'une quelconque des revendications précédentes, **caractérisé en ce que** le dispositif présente une chambre de déplacement (24) servant à absorber la force axiale du rotor de turbine.

5. Dispositif servant à déplacer par coulissement de manière axiale un rotor de turbine selon l'une quelconque des revendications précédentes, **caractérisé en ce que** la chambre de déplacement (24) présente une chambre de pression (20) servant à déplacer par coulissement de manière hydraulique ou pneumatique les deux moitiés d'arbre (22, 23) l'une par rapport à l'autre.

6. Dispositif servant à déplacer par coulissement de manière axiale un rotor de turbine selon l'une quelconque des revendications précédentes, **caractérisé en ce que** le dispositif 1 peut être actionné de manière mécanique.

7. Dispositif servant à déplacer par coulissement de manière axiale un rotor de turbine selon l'une quelconque des revendications précédentes, **caractérisé en ce que** le dispositif 1 peut être actionné de manière électromagnétique.

8. Dispositif servant à déplacer par coulissement de manière axiale un rotor de turbine selon l'une quelconque des revendications précédentes, **caractérisé en ce que** le dispositif 1 peut être actionné de manière piézoélectrique.

9. Dispositif servant à déplacer par coulissement de manière axiale un rotor de turbine selon l'une quelconque des revendications précédentes, **caractérisé en ce qu'**un trajet de déplacement par coulissement caractéristique de l'arbre de turbine (22, 23) divisé de + 4 mm à - 4 mm est prévu.

10. Dispositif servant à déplacer par coulissement de manière axiale un rotor de turbine selon l'une quelconque des revendications précédentes, **caractérisé en ce qu'**un dispositif servant à réguler le trajet de déplacement par coulissement de l'arbre de turbine (22, 23) divisé est prévu.

11. Dispositif servant à déplacer par coulissement de manière axiale un rotor de turbine selon l'une quelconque des revendications précédentes, **caractérisé en ce que** des systèmes de détection sont prévus pour détecter la position réelle de l'arbre de turbine (22, 23) divisé.
